Europäisches Patentamt

European Patent Office

Office européen des brevets

(19)

(11) Publication number : **0 463 705 B1**

(12) # EUROPEAN PATENT SPECIFICATION

(45) Date of publication of patent specification :
20.09.95 Bulletin 95/38

(51) Int. Cl.[6] : **H01S 3/097**

(21) Application number : **91201674.8**

(22) Date of filing : **28.06.91**

(54) **Device for exciting a gas discharge laser.**

(30) Priority : **29.06.90 NL 9001496**

(43) Date of publication of application :
**02.01.92 Bulletin 92/01**

(45) Publication of the grant of the patent :
**20.09.95 Bulletin 95/38**

(84) Designated Contracting States :
**AT BE CH DE DK ES FR GB GR IT LI LU NL SE**

(56) References cited :
**EP-A- 0 408 142**
**WO-A-89/10657**
**SOV. PHYS. TECH. PHYS., vol. 31, no. 7, July 1986, pages 816-817 ; V.P. AGEEV et al. : "Periodic pulsed excimer laser with a magnetic compression section"**

(56) References cited :
**DIGEST OF TECHNICAL PAPERS, 5TH IEEE PULSED POWER CONFERENCE, Alrington, 10th -12th June 1985, pages 656-659 ; T. SHIMADA et al. : "Semiconductor switched magnetic modulator for rep-rate lasers"**

(73) Proprietor : **NEDERLANDS CENTRUM VOOR LASER RESEARCH B.V.**
**Postbus 2662**
**NL-7500 CR Enschede (NL)**

(72) Inventor : **Witteman, Wilhelmus Jacobus**
**Dolf Nijhoffstraat 14**
**7552 GR Hengelo (NL)**

(74) Representative : **Smulders, Theodorus A.H.J., Ir. et al**
**Vereenigde Octrooibureaux**
**Nieuwe Parklaan 97**
**NL-2587 BN 's-Gravenhage (NL)**

EP 0 463 705 B1

## Description

The invention relates to a device for exciting a gas discharge laser, comprising: input terminals for a source of electric energy; first energy storage means to be coupled in parallel to the gas discharge laser; second energy storage means; means for coupling the first and the second energy storage means stepwise in order to change the voltage of the first energy storage means stepwise; and third energy storage means which are coupled to the first energy storage means via a magnetically saturable inductive element.

Such a device has previously been proposed in the earlier filed European patent application 90 201 848.0, which in the mean time has been published under number EP-A1-0 408 142.

For exciting a gas discharge laser it is necessary to momentarily supply to the laser gas a voltage pulse with a peak voltage that is much higher than the nominal circuit voltage of the laser. A possibility of supplying this high voltage is naturally to provide a separate voltage source with a high output voltage. This solution, however, is relatively expensive. The above-mentioned European patent application 90 201 848.0 accordingly proposes an excitation device in which use can be made of one or more voltage sources which supply an output voltage that is lower than the required ignition voltage. In this device, a first step involves a resonant energy exchange between the first energy storage means and the second energy storage means. Then, in a second step a resonant energy transfer occurs from the third energy storage means to the first energy storage means in order to achieve a voltage increase of the first energy storage means and thus to ignite the gas discharge laser.

The object of the invention is to improve this known device.

In particular, the object of the invention is to design the known device in such a way that as little magnetically saturable inductive element.

To that effect, in the excitation device of the above-mentioned type, according to the invention, the first energy storage means and the second energy storage means are coupled to each other via a second magnetically saturable element.

Preferably, the amount of magnetically saturable material in the second magnetically saturable inductive element has been chosen such that the blocking time thereof is at least approximately equal to the time required for energy transfer from the third energy storage means to the first energy storage means.

In a further preferred embodiment, the first energy storage means and the second energy storage means are coupled to each other via a pulse compression device.

A preferred embodiment of such a pulse compression transmission line comprises at least two at least substantially parallel conductors each having an input end and an output end, as well as dielectrics disposed between said conductors, which dielectrics successively define, viewed from the input ends to the output ends, at least one first dielectric portion with a non-saturable magnetic permeability and a second dielectric portion with a saturable magnetic permeability.

Further objects, features and advantages of the invention will be further explained in the following description of preferred embodiments of the excitation device according to the invention, with reference to the drawings, in which like reference characters refer to like parts, and in which:

Fig. 1 is a circuit diagram of a previously proposed device for exciting a gas discharge laser;

Fig. 2 is a circuit diagram of a first embodiment of a device for exciting a gas discharge laser according to the invention;

Fig. 3 is a circuit diagram of a second embodiment of a device for exciting a gas discharge laser according to the invention, comprising a pulse compression device;

Fig. 4 is a circuit diagram of a pulse compression device which is known per se;

Fig. 5 is a schematic longitudinal section of a preferred embodiment of a pulse compression transmission line;

Figs 6A-C schematically show the traces of the voltage of, respectively, an input pulse and output pulses obtained by means of the pulse compression transmission line of Fig. 5;

Fig. 7 is a schematic longitudinal section of a further preferred embodiment of the pulse compression transmission line; and

Fig. 8 is a circuit diagram of a preferred embodiment of the device for exciting a gas discharge laser according to the invention.

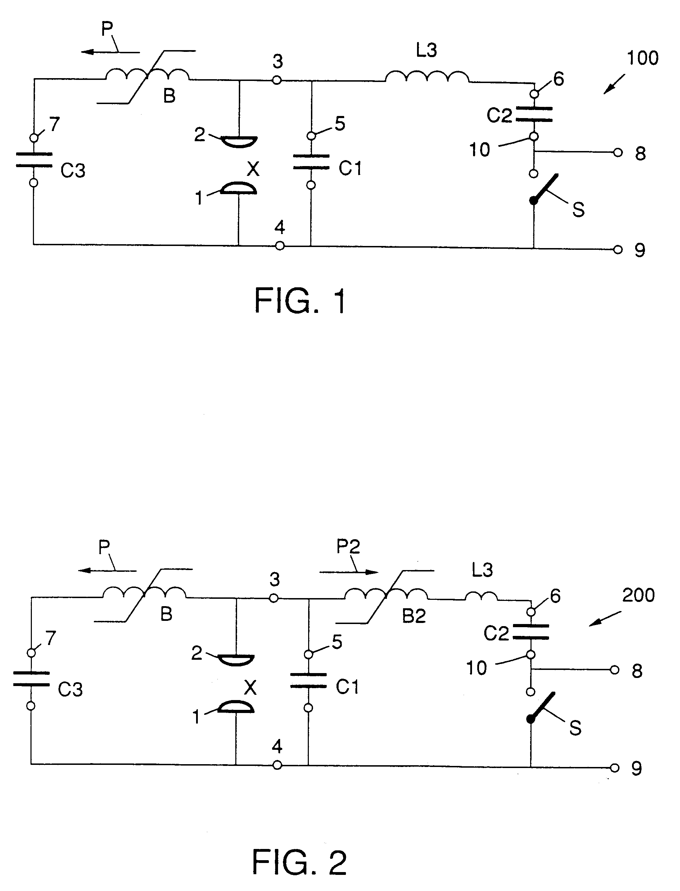

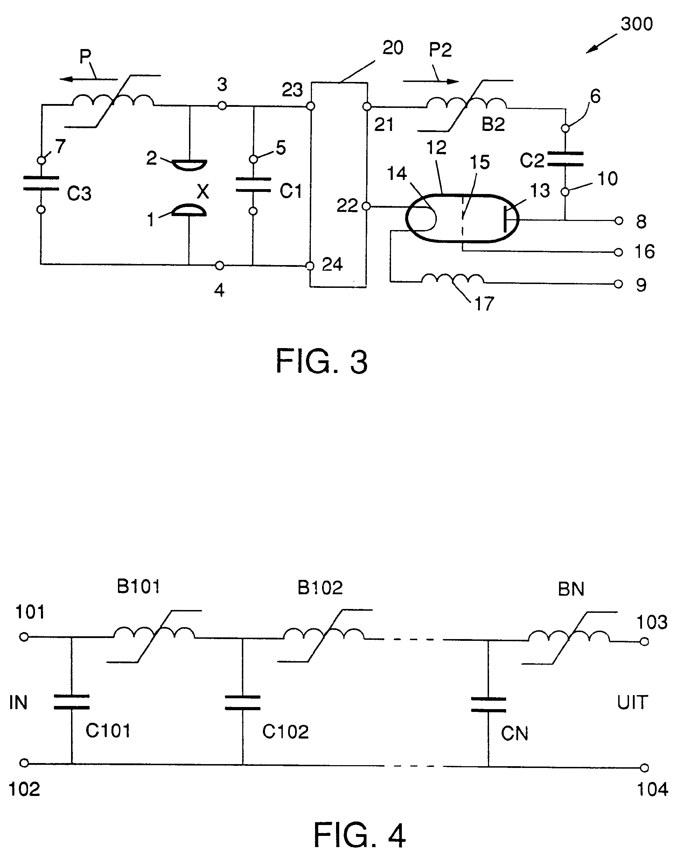

Fig. 1 shows a variant 100 of the known device as shown in Fig. 3 of the aforementioned European patent application 90 201 848.0, for exciting a gas discharge laser X, which can have an operating voltage $U_b$, i.e. the voltage at which the laser X is in normal operation, of 5 kV. An example of such a laser is a $CO_2$ laser or an excimer laser.

For starting the laser X it is desirable to apply an ignition voltage $U_l$ to the laser X which is greater than the operating voltage $U_b$, the general rule being that the laser X will ignite more quickly according as the ignition voltage $U_l$ applied is higher. The voltage dependence of the ignition time is non-linear: when the ignition voltage $U_l$ is about twice as great as the operating voltage $U_b$, the ignition time will be of the order of some microseconds; when the ignition voltage $U_l$ is about six times as great as the operating voltage $U_b$, the ignition time will be of the order of some nanoseconds. Since for a stable operation of the laser X it is desirable that the ignition time is as short as possible, preferably of the order of some nanoseconds, the known device is designed to momentarily apply an ignition voltage $U_i$ of about $6U_b$ to the laser X.

In the known excitation device two electrodes 1,2 of the gas discharge laser X are connected to first energy storage means $C_1$. These energy storage means may for instance comprise one capacitor or a plurality of capacitors connected in parallel. The function of the first energy storage means $C_1$ is to provide the ignition voltage $U_i$ to the laser X.

Connected in parallel with the first energy storage means $C_1$ is a circuit comprising second energy storage means $C_2$, an inductivity $L_3$ and a switch S. The inductivity $L_3$ can consist of the parasitic induction of the circuit which is formed by $C_1$, $C_2$, S, and the conductors connecting these components. By way of illustration, the switch S is shown as a mechanical switch. It is observed that the only essential difference between the device shown in Fig. 1 and the device shown in Fig. 3 of European patent application 90 201 848.0 is the position of the switch S in the circuit.

The two electrodes 1,2 of the gas discharge laser X are coupled with third energy storage means $C_3$ via a magnetically saturable inductive element B, for instance a coil wound round a core of saturable magnetic material such as ferrite.

The operation of this variant of the known device is as follows. By means of a source for electric energy (not shown for the sake of simplicity), for instance a voltage source, connected between input terminals 3 and 4, the terminal 5 of the first energy storage means $C_1$, the terminal 6 of the second energy storage means $C_2$, and the terminal 7 of the third energy storage means $C_3$ are charged to a voltage $2U_b$ relative to the electrode 1 of the laser X.

During the charging of the third energy storage means $C_3$, the magnetically saturable inductive element B has been saturated, so that it operates as a magnetic diode allowing a current to flow through it only in the direction indicated by the arrow P, there occurring virtually no voltage drop across the element B. This phenomenon will hereinafter be referred to as "polarization in the direction P". When the voltage across the element B changes sign, the element B will block, i.e. that in the circuit that includes B, no current will flow. Thus a substantial voltage drop can occur across the element B. In the element B itself, however, a polarizing current will occur, which after lapse of a period of time $t_B$, hereinafter referred to as "blocking time", will change the polarization direction of the element B.

In an analogous manner, the terminal 10 of the second energy storage means $C_2$ is charged to a voltage of $4U_b$ by means of a source for electric energy (not shown either for the sake of simplicity), connected between terminals 8 and 9.

It is observed that now the voltage across the electrodes 1,2 of the gas discharge laser X is $2U_b$, and that therefore, if the situation does not change, the gas discharge laser X will ignite only after some microseconds.

Then the switch S is closed. As a result, the terminal 10 of the second energy storage means $C_2$ is charged to the reference voltage. The voltage step of $-4U_b$ occurring here is transmitted by the second energy storage means $C_2$ to the terminal 6 of the second energy storage means $C_2$ practically directly, so that the terminal 6 is adjusted to a voltage $-2U_b$. Then during a time $\tau_1$ resonant charge exchange occurs between the second energy storage means $C_2$ and the first energy storage means $C_1$ across the inductivity $L_3$. When the capacity value of the second energy storage means $C_2$ is of the same order of magnitude as the capacity value of the first energy storage means $C_1$, after this resonant charge exchange, so at time $\tau_1$ after closing of the switch S, the voltage of the terminal 5 of the first energy storage means $C_1$ will be equal to $-2U_b$ or at least a good approximation thereof.

During the above-mentioned resonant charge exchange, where the voltage of $C_2$ changes from $2U_b$ to $-2U_b$, occurs the earlier described polarization reversal of the magnetically saturable inductive element B. Thus, the third energy storage means $C_3$ will be capable of supplying current to the first energy storage means $C_1$ after approximately time $t_B$.

The onset of this current supply by the third energy storage means $C_3$ to the first energy storage means $C_1$ is relatively slow as a result of the reversal of the polarization direction of the element B. The known device is so designed that before said current is well under way, the aforementioned resonant charge exchange between the first energy storage means $C_1$ and the second energy storage means $C_2$ across the inductivity $L_3$ has taken place and the voltage of the terminal 5 of the first energy storage means $C_1$ has decreased to $-2U_b$. From the time $\tau_1$, during a time $\tau_2$, resonant energy transfer can then take place from the third energy storage means $C_3$ to the first energy storage means $C_1$. When the capacity value of the third energy storage means $C_3$ is considerably greater than the capacity value of the first energy storage means $C_1$, after this resonant energy transfer the voltage of the terminal 7 of the third energy storage means $C_3$ will still be approximately $2U_b$, while the voltage of the terminal 5 of the first energy storage means $C_1$ will have increased to $6U_b$. The reason is that the voltage increase of the terminal 5 of the first energy storage means $C_1$ can then be twice as great ("overshoot") as the original difference between the voltage of the terminal 7 of the third energy storage means $C_3$ ($2U_b$) and the voltage of the terminal 5 of the first energy storage means $C_1$ ($-2U_b$), i.e. twice as great as $4U_b$, so that after this resonant energy transfer the voltage of the terminal 5 of the first energy storage means $C_1$ has the value $-2U_b + 2 \times 4U_b$.

Then there will momentarily be a voltage of $6U_b$ across the electrodes 2 and 1 of the laser X, which is sufficient to ignite the laser X within some nanoseconds. In the process, the impedance of the laser gas will decrease and the laser will be kept burning from the third energy storage means $C_3$, with the voltage $2U_b$ of the third energy storage means $C_3$ being precisely dissipated in the laser X.

It will be clear that during the resonant energy transfer of the third energy storage means $C_3$ to the first energy storage means $C_1$, in principle the resonant energy exchange process between the first energy storage means $C_1$ and the second energy storage means $C_2$ continues, as a result of which the voltage on the terminal 5 of the first energy storage means $C_1$ will increase again. This further resonant energy exchange between the first energy storage means $C_1$ and the second energy storage means $C_2$ occurs with the same time constant $\tau_1$ as the initial resonant energy exchange between the first energy storage means $C_1$ and the second energy storage means $C_2$.

To ensure that the resonant energy transfer from the third energy storage means $C_3$ to the first energy storage means $C_1$ has by and large been completed before the further resonant energy exchange process between the first energy storage means $C_1$ and the second energy storage means $C_2$ occurs to any considerable extent, it is necessary in the known device that the resonance time $\tau_2$ in the circuit formed by $C_1$ and $C_3$ for supplying the voltage $6U_b$ to the terminal 5 of the first energy storage means $C_1$ is much shorter than the resonance time $\tau_1$ in de circuit formed by $C_1$ and $C_2$.

To satisfy this requirement, the circuit formed by $C_1$ and $C_3$ must be so designed that the resonance time $\tau_2$ thereof is as short as possible. To that effect, the element B must be so designed that in the saturated state it is as induction-low as possible. One way of achieving this is to design the element B in the form of a "race track". In such a form, however, the blocking action of element B in the blocking state is relatively inefficient, so that for obtaining a given blocking time $t_B$ relatively much magnetically saturable material is necessary.

On the other hand, however, it is desirable that the amount of magnetically saturable material in the magnetically saturable inductive element B is as small as possible. One reason is that this material is relatively expensive. Another reason is that then the third energy storage means $C_3$ can discharge across the laser relatively quickly, which in view of a good laser operation is desirable. A further reason is that then the energy losses owing to dissipation in the magnetically saturable material are minimized. On the one hand, such losses adversely influence the efficiency of the laser, and, on the other, they lead to a need for cooling of the magnetically saturable inductive element B.

The above holds all the more when it is desired that the laser X be operated at a relatively high repetition frequency of 1 kHz, for instance.

Another approach to satisfying the abovementioned criterion that the resonance time $\tau_2$ must be much smaller than the resonance time $\tau_1$ is to design the circuit formed by $C_1$ and $C_2$ in such a manner that the resonance time $\tau_1$ thereof is comparatively long, for instance by including an additonal inductivity in this circuit. However, a consequence thereof is that the initial resonant energy exchange process between the first energy storage means $C_1$ and the second energy storage means $C_2$ will then take a relatively long time, so that $t_B$, the time during which the element B is to block, must be comparatively long. Since the magnitude of the time $t_B$ is proportional to the amount of magnetically saturable material in the magnetically saturable inductive element B, according to the formula:

$$U \cdot t_B = N \cdot A \cdot \Delta\phi \quad (1)$$

wherein:

U is the voltage across the element B;

N is the number of windings of the coil;

A is the area of the magnetically saturable material; and

$\Delta\phi$ is the total flux swing $[Vs/m^2]$;

this in turn means that the element B must contain comparatively much magnetically saturable material, which is undesirable for the reasons already mentioned.

One object of the present invention is to provide a solution to this problem.

Fig. 2 shows a first embodiment 200 of an excitation device according to the invention, in which a solution to this problem is provided by including in the circuit formed by $C_1$ and $C_2$ a second magnetically saturable inductive element $B_2$.

The operation of the device 200 is as follows. During charging of the second energy storage means $C_2$, the second magnetically saturable inductive element $B_2$ has been polarized in the direction indicated by the arrow $P_2$. When the switch S is closed, and the voltage on the terminal 6 of the second energy storage means $C_2$ decreases from $2U_b$ to $-2U_b$, a current can directly flow from the first energy storage means $C_1$ to the second energy storage means $C_2$ without loss of voltage, through the second magnetically saturable inductive element $B_2$, that is, with the voltage on the terminal 5 of the first energy storage means $C_1$ decreasing from $2U_b$ to $-2U_b$ in the time $\tau_1$.

However, the further resonant energy exchange in this circuit sustains a delay by the presence of the second magnetically saturable inductive element $B_2$, since before the current in the second magnetically saturable inductive element $B_2$ can reverse its direction and the voltage on the terminal 5 of the first energy storage means $C_1$ can increase again, first a polarization reversal of the second magnetically saturable inductive element $B_2$ must occur. This polarization reversal takes a time $t_{B2}$, the magnitude of which depends inter alia on the amount of magnetically saturable material in the second magnetically saturable inductive element $B_2$ according to the formula (1) mentioned above. The device 200 is preferably designed in such a way that the resonant energy transfer from the third energy storage means $C_3$ to the first energy storage means $C_1$ has largely been completed before the abovementioned polarization reversal has been completed, i.e. that $\tau_2 \le t_{B2}$.

By including in the circuit formed by $C_1$ and $C_2$ a second magnetically saturable inductive element $B_2$, the requirements for the design of the excitation device according to the invention have been loosened in respect of the resonance times $\tau_1$ and $\tau_2$, since the resonance times $\tau_1$ and $\tau_2$ can be made as short as possible independently of each other. For optimum operation of the device 200 using a smallest possible amount of magnetically saturable material in the second magnetically saturable inductive element $B_2$, only the second magnetically saturable inductive element $B_2$ should be chosen such that $t_{B2}$ is at least approximately equal to $\tau_2$.

Even in the saturated state of the second magnetically saturable inductive element $B_2$ has the inductivity in the circuit formed by $C_1$ and $C_2$ of the device 200 been increased relative to that of the device 100, so that the time $\tau_1$ of the device 200 has been increased relative to that of the device 100. Because the blocking time $t_B$ of the magnetically saturable element B must be approximately equal to $\tau_1$, and because the amount of magnetically saturable material in the element B is proportional to $t_B$ according to the formula (1) mentioned above, a further improvement of the excitation device according to the invention, i.e. a further reduction of the amount of magnetically saturable material in the element B, can be provided by letting the time $\tau_1$ be as small as possible, more particularly approx. 20 ns, which value can be considered to be the lower limit feasible in practice.

By means of known switching means S (thyratron) minimal pulse widths of 100 ns can be achieved. A reason for this is that a thyratron has a relatively high inductivity. Moreover, when the thyratron is used to supply a pulse with an energy of approx. 2 J, for instance, and a voltage of approx, 10 kV, for instance, with a lower pulse duration, the current strength and current change occurring per unit time are greater than the upper limits permissible for the thyratron, so that the life time of the thyratron is strongly reduced.

In order to meet the above wish, it is proposed to include a pulse compression device between $C_2$ and $C_1$. Fig. 3 shows a device comparable to the device shown in Fig. 2, with a pulse compression device 20 being connected between $C_2$ and $C_1$ with input terminals 21 and 22 and output terminals 23 and 24. In Fig.

3 the inductivity $L_3$ has been omitted for the sake of simplicity. Further, the switching means S are now represented as a thyratron 12 with an anode 13, a cathode 14, and a control grid 15 with a control voltage terminal 16, which thyratron 12 is capable of supplying a pulse of a width of 100 ns. A protection coil is designated at 17, which serves to limit the current to be supplied by the thyratron 12 to a maximum permitted value.

A technique known per se for supplying a short voltage pulse is known by the name of magnetic pulse compression. Fig. 4 shows an embodiment of a device for providing a pulse compression according to that known technique, with input terminals 101 and 102, and output terminals 103 and 104. In the inoperative state, the capacitors C101, C102, ..., CN are discharged and the saturable coils B101, B102, ..., BN are in a blocking state for current flow from the input terminals 101 and 102 to the output terminals 103 and 104. When receiving a pulse of a predetermined width, the capacitor C101 is charged, and the coil B101 is polarized. The coil B101 is so designed that the time t101 required for polarization is equal to the pulse width of the input pulse. When the coil B101 saturates, resonant energy transfer from the capacitor C101 to the capacitor C102 occurs. This capacitor cannot transmit its energy back to the capacitor C101 anymore, because the coil B101 is polarized in the opposite direction.

The coil B102 has been so adapted that it has saturated during the charging of the capacitor C102. Thus, each time, a capacitor is resonantly charged by its predecessor. Since the inductivity of a coil in its saturated state is invariably much smaller than in its non-saturated state, each successive capacitor is discharged more rapidly than its predecessor, in other words, at each step the pulse width becomes smaller.

This known technique, however, especially for pulses with relatively minor energy contents, has a practical lower limit for the width of the output pulses supplied, because with such short pulses with relatively minor energy contents, the current required for saturating the saturable material takes up a relatively large part of the energy contents of the pulse. For a pulse with an energy of 2 J, for instance, the minimum achievable pulse width is approx. 50 ns. As such, a further decrease of the pulse width is possible by designing the saturable coils in the form of a race track, but as noted earlier, that requires a relatively large amount of magnetically saturable material, while the energy dissipation becomes unacceptably high.

Accordingly a pulse compression device wherein the output voltage pulse can be shorter than the output voltage pulse that can be achieved with the known technique, and wherein moreover the required amount of magnetically saturable material, and hence the energy dissipation, can be smaller is provided. In particular a device which is capable of supplying an output voltage pulse of the order of 20 ns is provided.

To that effect, a pulse compression device is designed as a transmission line. Such a device, which will hereinafter be referred to by the term "pulse compression transmission line", comprises preferably at least two, at least substantially parallel conductors each having an input end and an output end, as well as dielectrics disposed between said conductors, which dielectrics successively define, viewed from the input ends to the output ends, at least one first dielectric portion with a non-saturable magnetic permeability and a second dielectric portion with a saturable magnetic permeability.

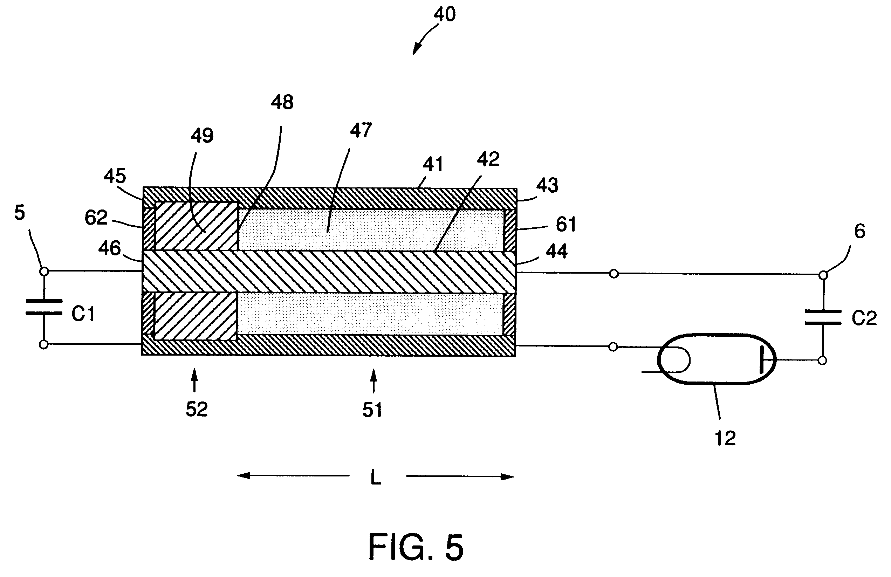

A preferred pulse compression transmission line is generally indicated at 40 in Fig. 5. For the sake of clarity, Fig. 5 further shows a part of the device 300. It is noted here that owing to the characteristics of the pulse compression transmission line 40, a separate magnetically saturable element $B_2$ is not required.

The pulse compression device 40 comprises two at least substantially parallel conductors 41 and 42 each having an input end 43, 44 and an output end 45, 46. The conductor 41 is designed as a cylindrical shell, in this embodiment as a circular cylindrical shell, and the conductor 42 is designed as a member arranged coaxially within the cylindrical shell 41, the profile of the outer wall of the conductor 42 corresponding with the inner wall of the shell 41, i.e. a circular cylindrical profile in this embodiment.

Arranged between the conductors 41 and 42 are dielectrics which successively define, viewed from the input ends 43,44 to the output ends 45,46, a first dielectric portion 47 with a non-saturable magnetic permeability and a second dielectric portion 48 with a saturable magnetic permeability. In this embodiment the second dielectric portion 48 comprises an annular saturable ferrite member 49 arranged at some distance from the input ends 43,44 between the shell 41 and the member 42. The annular saturable ferrite-member 49 can be formed by juxtaposing standard saturable ferrite-rings.

The pulse compression transmission device 40 described above forms a physically continuous pulse transmission line, of which a first transmission line portion 51 disposed between the input ends 43,44 and the ferrite member 49 has a substantially capacitive impedance, and of which a second transmission line portion 52 defined by the ferrite member 49 has a substantially inductive impedance.

Preferably, for forming the first dielectric portion 47, there is disposed in the free space between the member 42 and the shell 41 a substance of a dielectric constant greater than that of air. Thus, while the capacity value of the first transmission line portion 51 remains the same, the length thereof may be reduced, so that the pulse compression transmission line can be cheaper and the pulse transmission time can be shorter. Further, the mutual distance between the member 42 and the shell 41 can thus be increased, so that voltage breakdown therebetween can be prevented better.

Preferably, for the substance referred to, at least in part, a liquid is used, preferably water. The advantage of water is that it is cheap, while $\varepsilon_r$ of water is relatively high, i.e. approximately 80.

At the input ends 43,44 and the output ends 45,46 the shell 41 can be sealingly connected to the member 42 by means of sealing members 61, 62. If it is desired that the water can flow between the member 42 and the outer cover 41, and thereby simultaneously functions as a cooling liquid, at the output ends 43, 44 and the output ends 45, 46 inlet and outlet connections for the liquid may be present. These inlet and outlet connections can be of any suitable type and have been omitted from Fig. 5 for simplicity's sake.

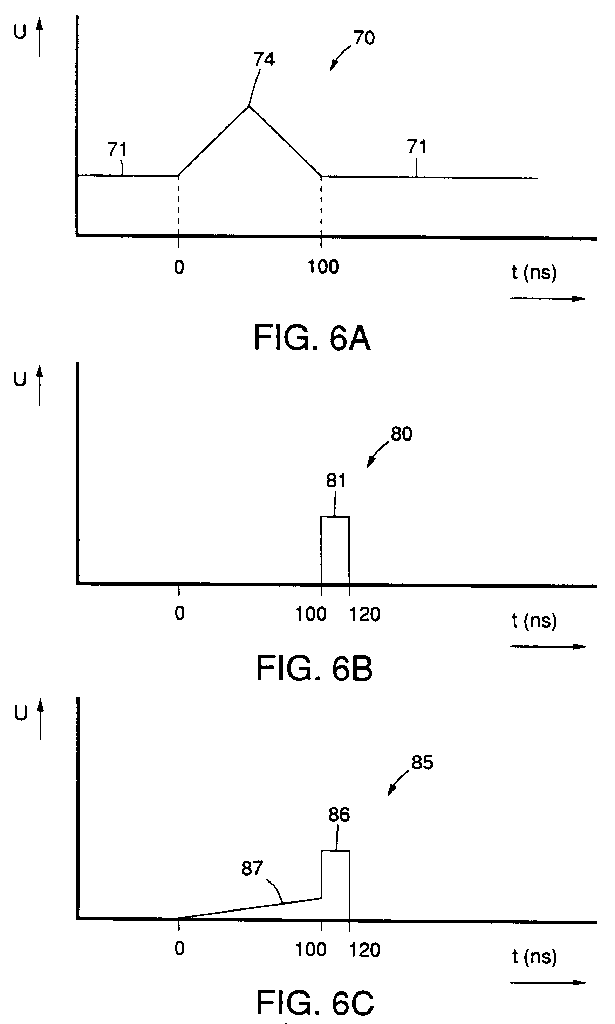

Hereinafter, the operation of the pulse compression transmission line 40 will be described for an input voltage pulse to be designated as positive. Fig. 6A shows the course of the voltage of a pulse 70 schematically represented as a triangle-signal, which can be supplied by the thyratron 12 of Fig. 3 and, in the ebodiment shown, has a width of 100 ns and which can serve as an input pulse for the pulse compression transmission line 40. The voltage value corresponding to the continuous level 71, and the voltage value corresponding to the pulse peak 74, are not relevant for the following discussion, which explains why no units are shown along the vertical axis. As an illustration, one might think of a voltage value of -10 kV for the continuous level 71 and of a voltage value of +10 kV for the pulse peak 74.

When the pulse 70 is applied to the input of the pulse compression transmission line 40, during the width of the input pulse 70 the voltage on the input of the pulse compression transmission line 40 is higher than the voltage on the output of the pulse compression transmission line 40. As will be clarified hereinafter, at the instant the voltage pulse 70 is applied to the input of the pulse compression transmission line 40, the annular saturable ferrite member 49 is polarized in a direction opposing the flow of current as a result of the above-mentioned voltage difference. There occurs a resonant charge exchange between the second energy storage means $C_2$ and the first, capacitive transmission line portion 51. For proper matching of the input impedance of the pulse compression transmission line to the impedance of the second energy storage means $C_2$, and to accomplish that after this resonant charge exchange the voltage of the first transmission line portion 51 is at least approximately equal to the voltage of the terminal 6 of the second energy storage means $C_2$ immediately prior to this resonant charge exchange, the capacity value of the first transmission line portion 51 is preferably at least substantially equal to the capacity value of the second energy storage means $C_2$.

The amount of magnetizable material of the annular saturable ferrite member 49 is preferably chosen such that the polarization reversal thereof according to formula (1) is precisely completed after this resonant charge exchange, so that now a charge exchange can occur between the first transmission line portion 51 and the first energy storage means $C_1$. This charge exchange, however, is not a purely resonant charge exchange, but is governed by the characteristic of a transmission line. A consequence thereof is that the charge prsent in the first transmission line portion 51 is transferred at the velocity of light to the first energy storage means $C_1$, there being generated at the output of the pulse compression transmission line 40 a voltage pulse 80 whose height 81 is virtually constant and at least approximately equal to the voltage of the first transmission line portion 51, caused by said resonant charge exchange, and whose width is determined by the axial length L of the first transmission line portion 51.

When this charge exchange has been completed, the further charge exchange between the first transmission line portion 51 and the first energy storage means $C_1$ - the current having changed direction, as indicated - is delayed because the second transmission line portion 52 is in the blocking state for such an opposite current.

For parallel conductors 41 and 42, the following formula applies to the width T of the output voltage pulse

$$T = 2L \cdot \sqrt{\varepsilon_0 \varepsilon_r \mu_0 \mu_r} \quad (2)$$

Since an output pulse width of about 20 ns is preferred, the axial length of the first transmission line portion 51 is preferably about 34 cm if the dielectric of the first transmission line portion 51 is water.

In Fig. 6B the output voltage of the pulse compression transmission line 40 so obtained is plotted to time, the vertical scale being the same as in Fig. 6A. It is noted that the form of the output pulse 80 as discussed hereinabove is the intrinsic form of the pulse 80, i.e. the form of the unloaded pulse.

To ensure that the charge exchange between the first transmission line portion 51 and the first energy storage means $C_1$ can occur in as undisturbed a manner as possible, i.e. that as few reflections as possible occur when passing the second transmission line portion 52, preferably the characteristic impedances of the first transmission line portion 51 and the second transmission line portion 52 are matched by an appropriate choice of the mutual distance between the conductors 41 and 42 at the location of the first dielectric portion 47 and the second dielectric portion 48. In the embodiment shown, in which the conductors 41 and 42 have a circular cylindrical shape and are arranged coaxially, the following formula applies to the characteristic impedance Z:

$$Z = \frac{1}{2\pi} \cdot \sqrt{\frac{\mu_0 \mu_r}{\varepsilon_0 \varepsilon_r}} \cdot \ln \left(\frac{R_2}{R_1}\right) \quad (3)$$

wherein: $R_1$ is the internal diameter of the outer conductor, and $R_2$ is the external diameter of the inner conductor.

By way of example, Fig. 5 shows a configuration of the pulse compression transmission line 40, in which the internal diameter of the outer conductor 41 is greater at the location of the second transmission line portion 52 than at the location of the first transmission line portion 51 in order to match the characteristic impedance of the second transmission line portion 52 to that of the first transmission line portion 51.

In practice, during the polarization reversal of the annular saturable ferrite member 49 a leakage current will flow, so that the output voltage of the pulse compression transmission line 40 will rise slowly. A resultant output voltage pulse 85 is shown in Fig. 6C, the portion 86 of the pulse corresponding to the portion 81 of the pulse shown in Fig. 6B, and the portion 87 of the pulse being the output voltage slowly rising as a result of the leakage current referred to, to be designated hereinafter by the term "pre-pulse".

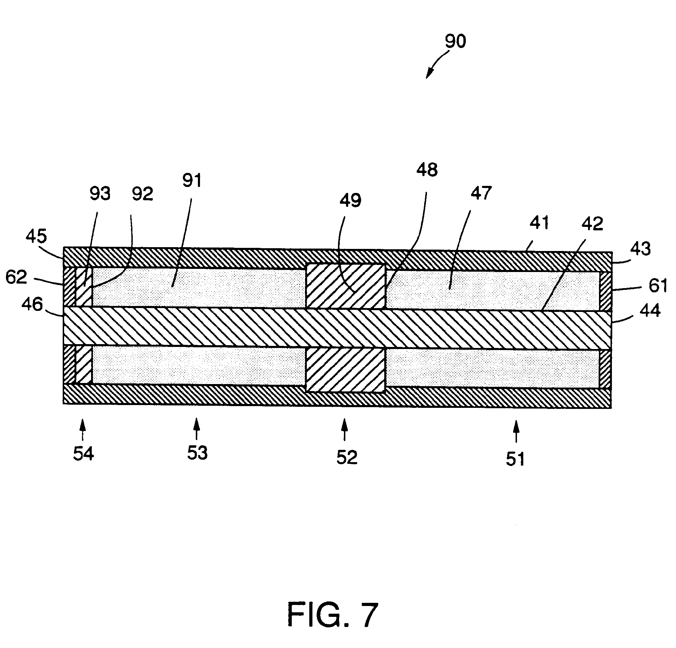

If so desired, this pre-pulse 87 can be eliminated from the output pulse 85. Fig. 7 shows a further preferred embodiment 90 of the pulse compression transmission line, which is suitable for that purpose. The conductors 41 and 42 extend beyond the annular saturable ferrite member 49. Directly after the ferrite member 49 follows a third dielectric portion 91 with a non-saturable magnetic permeability for forming a third transmission line portion 53 with a substantially capacitive impedance, and a fourth dielectric portion 92 with a saturable magnetic permeability for forming a fourth transmission line portion 54 with a substantially inductive impedance. In this embodiment the fourth dielectric portion 92 comprises an annular saturable ferrite member 93.

As a result of the pre-pulse 87 caused by the leakage current referred to, the voltage of the third transmission line portion 53 slowly increases for 100 ns. Since the annular saturable ferrite member 93 of the fourth transmission line portion 54 is polarized in a direction which opposes the passage of current as a result of the voltage difference across the ferrite member 93 so caused, this voltage difference first effects a polarization reversal of the annular saturable ferrite member 93. The amount of magnetizable material of the annular saturable ferrite member 93 is preferably chosen such that the polarization reversal thereof according to formula (1) is precisely completed after the resonant charge exchange between the second energy storage means $C_2$ and the first transmission line portion 51, so that the annular saturable ferrite member 93 stops the pre-pulse 87 but forms no hindrance to the main pulse 86.

Preferably, the capacity value of the third transmission line portion 53 is substantially equal to that of the first transmission line portion 51. On the one hand, a good impedance matching is thus achieved, while on the other hand it is thus achieved that the voltage of the third transmission line portion 53 caused by the leakage current (87) is much smaller than the voltage of the first transmission line portion 51 caused by the main pulse, so that according to formula (1) the amount of saturable magnetizable material of the ferrite member 93 can be smaller than that of the ferrite member 49.

It is noted that in practice in the pulse compression transmission line at the transition of one transmission line portion to a next transmission line portion, such as for instance at the transition of the first capacitive portion 51 to the first inductive portion 52, and at the transition of the first inductive portion 52 to the second capacitive portion 53, as a result of incomplete impedance matching reflections and transmissions can occur which give the pulse 85 a shape that deviates undesirably from the form shown in Fig. 6C. To eliminate such deviations of form, the second inductive portion 54 can be dimensioned such that transmissions are also stopped.

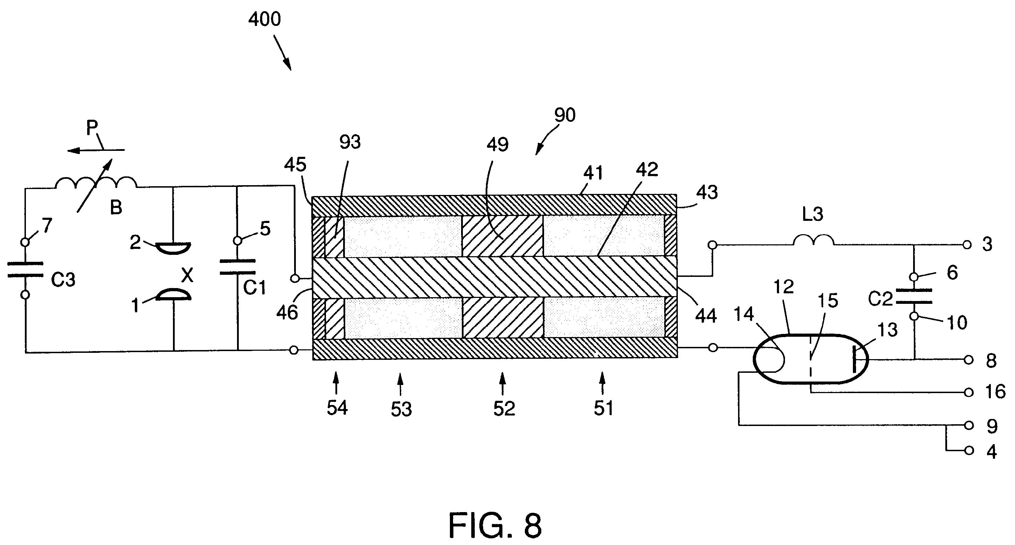

Fig. 8 shows a preferred embodiment of the excitation device for a gas discharge laser, generally indicated by reference character 400. The excitation device 400 comprises the pulse compression transmission line 90. The input terminals 3 and 4 for the source of electric energy referred to are coupled to the input ends 44 and 43 of the pulse compression transmission line 90, to ensure that during charging of the first energy storage means $C_1$ and the third energy storage means $C_3$, the magnetically saturable transmission line portions 52 and 54 are polarized in the proper direction, as discussed hereinabove.

The operation of the excitation device 400 is largely comparable to that of the device 100 shown in Fig. 1, with the understanding that the voltage jump of the first energy storage means $C_1$ occurs in a much shorter time, i.e. about 20 ns, so that the amount of saturable ferrite in the magnetically saturable inductive element B can be reduced.

It will be clear to anyone skilled in the art that it is possible to change or modify the embodiment shown of the device according to the invention without departing from the scope of the invention. Thus, it is for instance possible that, if so desired, further stages, always comprising a capacitive and an inductive transmission line portion, can be added to the pulse compression transmission line. Further, at the location of each successive inductive transmission line portion, an impedance matching can be achieved by an appropriate choice of the dimensions.

## Claims

1. A device for exciting a gas discharge laser (X), comprising:
   input terminals (3, 4) for a source of electric energy;
   first energy storage means ($C_1$) to be coupled in parallel to the gas discharge laser (X);
   second energy storage means ($C_2$);
   means (S) for stepwise coupling the first and the second energy storage means in order to change the voltage of the first energy storage means ($C_1$) stepwise;
   and third energy storage means ($C_3$) which are coupled to the first energy storage means ($C_1$) via a magnetically saturable inductive element (B);
   **characterized in that** the first energy storage means ($C_1$) and the second energy storage means ($C_2$) are coupled to each other via a second magnetically saturable inductive element ($B_2$).

2. A device according to claim 1, characterized in that the second magnetically saturable inductive element ($B_2$) has such an amount of magnetically saturable material that the blocking time ($t_{B2}$) thereof is greater or at least approximately equal to the time ($\tau_2$) required for energy transfer from the third energy storage means ($C_3$) to the first energy storage means ($C_1$).

3. A device according to claim 1 or 2, characterized in that the first energy storage means ($C_1$) and the second energy storage means ($C_2$) are coupled to each other via a pulse compression device (20).

4. A device according to claim 3, characterized in that the pulse compression device (20) is designed as a transmission line (40).

5. A device according to claim 4, characterized by at least two, at least substantially parallel conductors (41, 42) each having an input end (43, 44) and an output end (45, 46), as well as dielectrics disposed between said conductors, which dielectrics successively define, viewed from the input ends (43, 44) to the output ends (45, 46), at least one first dielectric portion (47) with a non-saturable magnetic permeability and a second dielectric portion (48) with a saturable magnetic permeability.

6. A device according to claim 5, characterized by an electrically conducting cylindrical outer shell (41) and an electrically conducting inner member (42) arranged coaxially within the cylindrical outer shell (41), and further characterized in that the second dielectric portion (48) comprises an annular ferrite member (49) arranged between the inner member (42) and the outer shell (41).

7. A device according to claim 5 or 6, characterized in that a first transmission line portion (51) disposed at the input ends has a substantially capacitive impedance, and that a second transmission line portion (52) defined by the second dielectric portion (48) has a substantially inductive impedance.

8. A device according to at least one of claims 5-7. characterized in that there is disposed in the free space between the conductors (41, 42) a substance having a dielectric constant greater than that of air, for forming the first dielectric portion (47).

9. A device according to claim 8, characterized in that the conductors (41, 42) are sealingly connected to each other at the ends thereof, and that said substance comprises a liquid.

10. A device according to claim 9, characterized in that said liquid is water.

11. A device according to claim 9 or 10, characterized in that there are provided inlet connections and outlet connections for the liquid at the input ends (43, 44) and the output ends (45, 46).

12. A device according to at least one of claims 5-11, characterized in that the capacity value of the first transmission line portion (51) defined by the first dielectric portion (47) is at least substantially equal to the capacity value of the second energy storage means ($C_2$).

13. A device according to at least one of claims 5-12, characterized in that the first dielectric portion (47) has such an amount of magnetizable material that the polarization reversal thereof is precisely completed after the resonant charge exchange between the two energy storage means and the first transmission line portion (51).

14. A device according to at least one of claims 10-13, characterized in that the axial length (L) of the first transmission line portion (51) is about 34 cm.

15. A device according to at least one of claims 5-14, characterized by a third dielectric portion (91) following the second dielectric portion (48), said third dielectric portion having a non-saturable magnetic permeability for forming a third transmission line portion (53) having a substantially capacitive impedance, and a next, fourth dielectric portion (92) having a saturable magnetic permeability for forming a fourth transmission line portion (54) having a substantially inductive impedance.

16. A device according to claim 15, characterized in that the fourth dielectric portion (92) comprises an annular saturable ferrite member (93).

17. A device according to claim 15 or 16, characterized in that the fourth dielectric portion (92) has such an amount of magnetizable material that the polarization reversal thereof by a leakage current is precisely completed after the resonant charge exchange between the second energy storage means ($C_2$) and the first transmission line portion (51).

18. A device according to at least one of claims of 15-17, characterized in that the capacity value of the third transmission line portion (53) is substantially equal to that of the first transmission line portion (51).

19. A device according to at least one of claims 5-18, characterized in that the input terminals (3, 4) for the source of electric energy are coupled to the input ends (43, 44) of the pulse compression transmission line (40; 90).

20. A device according to at least one of claims 5-19, characterized in that the characteristic impedances of the transmission line portions are matched to each other by an appropriate choice of the mutual distance between the conductors at the location of the corresponding dielectric portions.

21. A gas discharge laser, characterized by an excitation device according to at least one of claims 1-20.

## Patentansprüche

1. Vorrichtung zum Erregen eines Gasentladungslasers (X), umfassend
Eingangsklemmen (3, 4) für eine Quelle elektrischer Energie, eine erste Energiespeichereinrichtung ($C_1$) in Parallelschaltung zu dem Gasentladungslaser (X), eine zweite Energiespeichereinrichtung ($C_2$), eine Einrichtung (S) zum stufenweisen Verbinden der ersten und der zweiten Energiespeichereinrichtungen, um die Spannung der ersten Energiespeichereinrichtung ($C_1$) stufenweise zu ändern, und eine dritte Energiespeichereinrichtung ($C_3$), die über ein magnetisch sättigbares induktives Element (B) an die erste Energiespeichereinrichtung (C) angeschlossen ist,
**dadurch gekennzeichnet,**
daß die erste Energiespeichereinrichtung ($C_1$) und die zweite Energiespeichereinrichtung ($C_2$) über ein zweites magnetisch sättigbares induktives Element ($B_2$) miteinander verbunden sind.

2. Vorrichtung nach Anspruch 1,
**dadurch gekennzeichnet,**
daß das zweite magnetisch sättigbare induktive Element ($B_2$) eine derartige Menge an magnetisch sättigbarem Material aufweist, daß dessen Sperrzeit ($t_{B2}$) größer ist oder wenigstens annähernd gleich der Zeit ($\tau_2$) ist, die für den Energietransfer von der dritten Energiespeichereinrichtung ($C_3$) zu der ersten Energiespeichereinrichtung ($C_1$) erforderlich ist.

3. Vorrichtung nach Anspruch 1 oder 2,
**dadurch gekennzeichnet,**
daß die erste Energiespeichereinrichtung ($C_1$) und die zweite Energiespeichereinrichtung ($C_2$) über eine Impulskompressionsvorrichtung (20) miteinander verbunden sind.

4. Vorrichtung nach Anspruch 3,
**dadurch gekennzeichnet,**
daß die Impulskompressionsvorrichtung (20) als eine Transmissionsleitung (40) ausgelegt ist.

5. Vorrichtung nach Anspruch 4,
**gekennzeichnet**
durch wenigstens zwei, zumindest im wesentlichen parallele Leiter (41, 42), von denen jeder ein Eingangsende (43, 44) und ein Ausgangsende (45, 46) sowie Dielektrika aufweist, die zwischen diesen Leitern angeordnet sind, wobei die Dielektrika nacheinander in der Richtung von den Eingangsenden (43, 44) zu den Ausgangsenden (45, 46) nacheinander wenigstens einen ersten dielektrischen Abschnitt (47) mit einer nicht sättigbaren magnetischen Permeabilität und einen zweiten dielektrischen Abschnitt (48) mit einer sättigbaren magnetischen Permeabilität bilden.

6. Vorrichtung nach Anspruch 5,
**gekennzeichnet**
durch eine elektrisch leitende, zylindrische Außenhülle (41) und ein elektrisch leitendes Innenteil (42), das koaxial innerhalb der zylindrischen Außenhülle (41) angeordnet ist, und weiterhin
**dadurch gekennzeichnet,**
daß der zweite dielektrische Abschnitt (48) ein ringförmiges Ferritteil (49) aufweist, das zwischen dem Innenteil (42) und der Außenhülle (41) angeordnet ist.

7. Vorrichtung nach Anspruch 5 oder 6,
**dadurch gekennzeichnet,**
daß ein erster Transmissionsleitungsabschnitt (51), der an den Eingangsenden angeordnet ist, eine im wesentlichen kapazitive Impedanz aufweist, und daß ein zweiter Transmissionsleitungsabschnitt (52), der durch den zweiten dielektrischen Abschnitt (48) gebildet ist, eine im wesentlichen induktive Impedanz aufweist.

8. Vorrichtung nach wenigstens einem der Ansprüche 5 bis 7,
**dadurch gekennzeichnet,**
daß in dem freien Raum zwischen den Leitern (41, 42) eine Substanz mit einer dielekrischen Konstante größer als die von Luft zur Ausbildung des ersten dielektrischen Abschnitts (47) angeordnet ist.

9. Vorrichtung nach Anspruch 8,
**dadurch gekennzeichnet,**
daß die Leiter (41, 42) an ihren Enden dicht miteinander verbunden sind, und daß die Substanz eine Flüssigkeit umfaßt.

10. Vorrichtung nach Anspruch 9,
**dadurch gekennzeichnet,**
daß die Flüssigkeit Wasser ist.

11. Vorrichtung nach Anspruch 9 oder 10,
**dadurch gekennzeichnet,**
daß an den Eingangsenden (43, 44) und den Ausgangsenden (45, 46) Einlaßanschlüsse und Auslaßanschlüsse für die Flüssigkeit vorgesehen sind.

12. Vorrichtung nach wenigstens einem der Ansprüche 5 bis 11,
**dadurch gekennzeichnet,**
daß der Kapazitätswert des ersten Transmissionsleitungsabschnitts (51), der durch den ersten dielektrischen Abschnitt (47) gebildet ist, wenigstens im wesentlichen gleich dem Kapazitätswert der zweiten Energiespeichereinrichtung ($C_2$) ist.

13. Vorrichtung nach wenigstens einem der Ansprüche 5 bis 12,
**dadurch gekennzeichnet,**
daß der erste dielektrische Abschnitt (47) eine derartige Menge an magnetisierbarem Material aufweist, daß seine Polarisationsumkehr genau abgeschlossen ist nach dem Resonanzladungsaustausch zwischen den zwei Energiespeichereinrichtungen und dem ersten Transmissionsleitungsabschnitt (51).

14. Vorrichtung nach wenigstens einem der Ansprüche 10 bis 13,
**dadurch gekennzeichnet,**
daß die axiale Länge (L) des ersten Transmissionsleitungsabschnitts (51) etwa 34 cm ist.

15. Vorrichtung nach wenigstens einem der Ansprüche 5 bis 14,
**gekennzeichnet**
durch einen dritten dielektrischen Abschnitt (91) im Anschluß an den zweiten dielektrischen Abschnitt (48), wobei dieser dritte dielektrische Abschnitt eine nicht sättigbare magnetische Permeabilität zur Ausbildung eines dritten Transmissionsleitungsabschnitts (51) mit einer im wesentlichen kapazitiven Impedanz aufweist, und durch einen weiteren, vierten dielektrischen Abschnitt (92), der eine sättigbare magnetische Permeabilität zur Ausbildung eines vierten Transmissionsleitungsabschnitts (54) mit einer im wesentlichen induktiven Impedanz aufweist.

16. Vorrichtung nach Anspruch 15,
**dadurch gekennzeichnet,**
daß der vierte dielektrische Abschnitt (92) ein ringförmiges sättigbares Ferritteil (93) umfaßt.

17. Vorrichtung nach Anspruch 16,
**dadurch gekennzeichnet,**
daß der vierte dielektrische Abschnitt (92) eine derartige Menge an magnetisierbarem Material aufweist, daß seine Polarisationsumkehr durch einen Leckstrom genau abgeschlossen ist nach dem Resonanzladungsaustausch zwischen der zweiten Energiespeichereinrichtung ($C_2$) und dem ersten Transmissionsleitungsabschnitt (51).

18. Vorrichtung nach wenigstens einem der Ansprüche 15 bis 17,
**dadurch gekennzeichnet,**
daß der Kapazitätswert des dritten Transmissionsleitungs abschnitts (53) im wesentlichen gleich dem des ersten Transmissionsleitungsabschnitts (51) ist.

19. Vorrichtung nach wenigstens einem der Ansprüche 5 bis 18,
**dadurch gekennzeichnet,**
daß die Eingangsklemmen (3, 4) für die Quelle elektrische Energie mit den Eingangsenden (43, 44) der Transmissionsleitung (40; 90) für die Impulskompression verbunden sind.

20. Vorrichtung nach wenigstens einem der Ansprüche 5 bis 19,
**dadurch gekennzeichnet,**
daß die charakteristischen Impedanzen der Transmissionsleitungsabschnitte durch eine geeignete Wahl des gegenseitigen Abstandes zwischen den Leitern an der Stelle der entsprechenden dielektrischen Abschnitte aufeinander abgestimmt sind.

21. Gasentladungslaser,
**gekennzeichnet**
durch eine Erregervorrichtung nach wenigstens einem der Ansprüche 1 bis 20.

**Revendications**

1. Dispositif pour exciter un laser à décharge à gaz (X) comprenant :
des bornes d'entrés (3, 4) pour une source d'énergie électrique ;
un premier moyen de stockage d'énergie ($C_1$) à coupler en parallèle au laser à décharge à gaz (X) ;
un second moyen de stockage d'énergie ($C_2$) ;
un moyen (S) pour coupler par pas les premier et second moyens de stockage d'énergie afin de modifier la tension du premier moyen de stockage d'énergie ($C_1$) par pas ; et
un troisième moyen de stockage d'énergie ($C_3$) qui est couplé au premier moyen de stockage d'énergie ($C_1$) via un élément inducteur saturable magnétiquement (B),
caractérisé en ce que le premier moyen de stockage d'énergie ($C_1$) et le second moyen de stockage d'énergie ($C_2$) sont couplés l'un à l'autre via un second élément inducteur saturable magnétiquement ($B_2$).

2. Dispositif selon la revendication 1, caractérisé en ce que le second élément inducteur saturable magnétiquement ($B_2$) présente une quantité de matériau saturable magnétiquement qui est telle que son temps de blocage ($t_{B2}$) est supérieur ou au moins approximativement égal au temps ($\tau_2$) requis pour un transfert d'énergie depuis le troisième moyen de stockage d'énergie ($C_3$) jusqu'au premier moyen de stockage d'énergie ($C_1$).

3. Dispositif selon la revendication 1 ou 2, caractérisé en ce que le premier moyen de stockage d'énergie ($C_1$) et le second moyen de stockage d'énergie ($C_2$) sont couplés l'un à l'autre via un dispositif de compression d'impulsion (20).

4. Dispositif selon la revendication 3, caractérisé en ce que le dispositif de compression d'impulsion (20) est conçu en tant que ligne de transmission (40).

5. Dispositif selon la revendication 4, caractérisé par au moins deux conducteurs au moins sensiblement parallèles (41, 42) dont chacun comporte une extrémité d'entrée (43, 44) et une extrémité de sortie (45, 46) ainsi que par des diélectriques disposés entre lesdits conducteurs, lesquels diélectriques définissent successivement, tel que vu depuis les extrémités d'entrée (43, 44) jusqu'aux extrémités de sortie (45, 46), au moins une première partie diélectrique (47) présentant une perméabilité magnétique non saturable et une seconde partie diélectrique (48) présentant une perméabilité magnétique saturable.

6. Dispositif selon la revendication 5, caractérisé par une coquille externe cylindrique électriquement conductrice (41) et par un élément interne électriquement conducteur (42) agencé coaxialement à l'intérieur de la coquille externe cylindrique (41) et caractérisé en outre en ce que la seconde partie diélectrique (48) comprend un élément en ferrite annulaire (49) agencé entre l'élément interne (42) et la coquille externe (41).

7. Dispositif selon la revendication 5 ou 6, caractérisé en ce qu'une première partie de ligne de transmission (51) disposée au niveau des extremités d'entrée présente une impédance sensiblement capacitive et en ce qu'une seconde partie de ligne de transmission (52) définie par la seconde partie diélectrique (48) présente une impédance sensiblement inductive.

8. Dispositif selon au moins l'une des revendications 5 à 7, caractérisé en ce qu'une substance présentant une constant diélectrique supérieure à celle de l'air est disposée dans l'espace libre entre les conducteurs (41, 42), pour former la première partie diélectrique (47).

9. Dispositif selon la revendication 8, caractérisé en ce que les conducteurs (41, 42) sont connectés de façon étanche l'un à l'autre au niveau de leurs extrémités en ce que ladite substance comprend un liquide.

10. Dispositif selon la revendication 9, caractérisé en ce que ledit liquide est de l'eau.

11. Dispositif selon la revendication 9 ou 10, caractérisé en ce que sont prévues des connexions d'entrée et des connexions de sortie pour le liquide au niveau des extrémités d'entrée (43, 44) et des extrémités de sorte (45, 46).

12. Dispositif selon au moins l'une des revendications 5 à 11, caractérisé en ce que la valeur de capacité de la première partie de ligne de transmission (51) définie par la première partie diélectrique (47) est au moins sensiblement égale à la valeur de capacité du second moyen de stockage d'énergie ($C_2$).

13. Dispositif selon au moins l'une des revendications 5 à 12, caractérisé en ce que la première partie diélectrique (47) présente une quantité de matériau magnétisable qui est telle que son inversion de polarisation est terminée de façon précise après l'échange de charge résonant entre les deux moyens de stockage d'énergie et la première partie de ligne de transmission (51).

14. Dispositif selon au moins l'une des revendications 10 à 13, caractérisé en ce que la longueur axiale (L) de la première partie de ligne de transmission (51) vaut environ 34 cm.

15. Dispositif selon au moins l'une des revendications 5 à 14, caractérisé par une troisième partie diélectrique (91) qui fait suite à la seconde partie diélectrique (48), ladite troisième partie diélectrique présentant une perméabilité magnétique non saturable pour former une troisième partie de ligne de transmission (53) présentant une impédance sensiblement capacitive, et par une quatrième partie diélectrique suivante (92) présentant une perméabilité magnétique saturable pour former une quatrième partie de ligne de transmission (54) présentant une impédance sensiblement inductive.

16. Dispositif selon la revendication 15, caractérisé en ce que la quatrième partie diélectrique (92) comprend un élément en ferrite saturable annulaire (93).

17. Dispositif selon la revendication 15 ou 16, caractérisé en ce que la quatrième partie diélectrique (92) présente une quantité de matériau magnétisable qui est telle que son inversion de polarisation par un courant de fuite est terminée de façon précise après l'échange de charge résonant entre le second moyen de stockage d'énergie ($C_2$) et la première partie de ligne de transmission (51).

18. Dispositif selon au moins l'une des revendications 15 à 17, caractérisé en ce que la valeur de capacité de la troisième partie de ligne de transmission (53) est sensiblement égale à celle de la première partie de ligne de transmission (51).

19. Dispositif selon au moins l'une des revendications 5 à 18, caractérisé en ce que les bornes d'entrée (3, 4) pour la source d'énergie électrique sont couplées aux extrémités d'entrée (43, 44) de la ligne de transmission de compression d'impulsion (40, 90).

**20.** Dispositif selon au moins l'une des revendications 5 à 19, caractérisé en ce que les impédances caractéristiques des parties de ligne de transmission sont adaptées les unes aux autres au moyen d'un choix approprié de la distance mutuelle séparant les conducteurs à l'emplacement des parties diélectriques correspondantes.

**21.** Laser à décharge à gaz caractérisé par un dispositif d'excitation selon au moins l'une des revendications 1 à 20.

FIG. 1

FIG. 2

14

FIG. 3

FIG. 4

FIG. 5

FIG. 6A

FIG. 6B

FIG. 6C

FIG. 7

FIG. 8

EP 0 463 705 B1